(19) **Europäisches Patentamt / European Patent Office / Office européen des brevets**

(11) **EP 4 550 448 A1**

(12) **EUROPEAN PATENT APPLICATION**
published in accordance with Art. 153(4) EPC

(43) Date of publication:
07.05.2025 Bulletin 2025/19

(21) Application number: 22946283.3

(22) Date of filing: 17.06.2022

(51) International Patent Classification (IPC):
$H01M\ 4/133^{(2010.01)}$     $H01M\ 4/1393^{(2010.01)}$
$H01M\ 4/485^{(2010.01)}$     $H01M\ 4/583^{(2010.01)}$

(52) Cooperative Patent Classification (CPC):
H01M 10/0431; H01M 4/04; H01M 4/13;
H01M 4/133; H01M 4/134; H01M 4/1393;
H01M 4/366; H01M 4/485; H01M 4/583;
H01M 4/66; H01M 10/0525; H01M 10/0587;
H01M 50/204; H01M 50/531; H01M 2004/021;
(Cont.)

(86) International application number:
PCT/CN2022/099437

(87) International publication number:
WO 2023/240595 (21.12.2023 Gazette 2023/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
Co., Limited
Ningde, Fujian 352100 (CN)

(72) Inventors:
• CAO, Yanming
Ningde, Fujian 352100 (CN)
• WU, Guisen
Ningde, Fujian 352100 (CN)
• TAN, Hongjuan
Ningde, Fujian 352100 (CN)
• LI, Wei
Ningde, Fujian 352100 (CN)

(74) Representative: Gong, Jinping
CocreateIP
Neumarkterstr. 21
81673 München (DE)

(54) **NEGATIVE ELECTRODE PLATE AND MANUFACTURING METHOD THEREFOR, ELECTRODE ASSEMBLY, AND SECONDARY BATTERY**

(57) The present application provides a negative electrode plate, comprising: a current collector; a first active material layer arranged on at least one surface of the current collector; and a second active material layer arranged on a surface of the first active material layer away from the current collector; wherein the first active material layer comprises a first active material, the second active material layer comprises a second active material, and the second active material has a lithiation potential and a delithiation potential higher than those of the first active material. The negative electrode plate according to the present application is capable of improving the safety and cycling performance of the secondary battery.

**FIG. 1**

EP 4 550 448 A1

(52) Cooperative Patent Classification (CPC): (Cont.)
H01M 2004/027; Y02E 60/10

## Description

### Technical Field

The present application relates to the field of batteries, and particularly relates to a negative electrode plate, a manufacturing method therefor, an electrode assembly comprising the same, a secondary battery, a battery module, a battery pack, and an electrical apparatus.

### Background

Secondary batteries are widely used because of having the advantages, such as reliable working performance, non-pollution, and memoryless effect. For example, as increasing importance is attached to environmental protection issues, new-energy vehicles are increasingly popularized, and the demand for power secondary batteries will show an explosive growth. However, as the application range of the secondary batteries becomes more and more extensive, performance of the secondary batteries is also severely challenged.

However, for a secondary battery, with the improvement of the energy density of the designed battery, a lithium plating phenomenon tends to occur at some positions of a negative electrode plate due to insufficient lithiation capacity. With the continuous generation of lithium dendrite, a separator is punctured, thereby resulting in a battery short circuit, and reducing safety performance of the battery. Therefore, there is an urgent need to design and develop a secondary battery that can effectively reduce the lithium plating risk without reducing the energy density of the battery.

### Summary of the Invention

In view of the above problems, an object of the present application is to provide a negative electrode plate, a manufacturing method therefor, a secondary battery comprising the same, a battery module, a battery pack, and an electrical apparatus. The negative electrode plate is locally coated with different active materials in bilayer, to reduce the lithium plating risk of the secondary battery, improve the safety performance of the secondary battery, and extend the service life of the battery, without reducing the energy density of the battery.

In order to achieve the above objective, a first aspect of the present application is intended to provide a negative electrode plate, comprising: a current collector; a first active material layer arranged on at least one surface of the current collector; and a second active material layer arranged on a surface of the first active material layer away from the current collector; wherein the first active material layer comprises a first active material, the second active material layer comprises a second active material, and the second active material has a lithiation potential and a delithiation potential higher than those of the first active material.

The first active material layer is locally coated with the second active material layer having the high lithiation potential and the high delithiation potential, thereby ameliorating the negative electrode lithium plating of the secondary battery, improving the safety performance of the secondary battery, and extending the service life of the battery, without reducing the energy density of the battery.

In some embodiments, there are a plurality of the second active material layers, and the plurality of the second active material layers are spaced. Therefore, the first active material layer can be selectively coated with the second active material layer at a selected position where lithium plating tends to occur, thereby improving the safety performance, cycling performance, and energy density of the secondary battery for the safety risk of lithium plating caused by insufficient lithiation capacity at the site of the secondary battery where lithium plating tends to occur.

In some embodiments, the lithiation potential of the second active material is higher than a lithiation potential of the first active material when a lithiation capacity of the negative electrode plate is within a range of 0-300 mAh/g. The lithiation potential of the second active material and the lithiation potential of the first active material satisfy the above relationship within the specific lithiation capacity range, to ensure that lithium from the positive electrode material can be first intercalated into the second active material, thereby reducing the overlithiation risk of the second active material, reducing the lithium plating risk of the negative electrode of the secondary battery, and improving the safety performance of the secondary battery.

In some embodiments, the delithiation potential of the second active material is higher than the delithiation potential of the first active material when the delithiation capacity of the negative electrode plate is within a range of 10-300 mAh/g. The delithiation potential of the second active material and the delithiation potential of the first active material satisfy the above relationship within the specific lithiation capacity range, so that lithium ions intercalated into the second active material are merely partially deintercalated or are not deintercalated in subsequent charging and discharging process of the battery, and the non-deintercalated lithium ions will fail to be reduced and generate lithium dendrite. That is, the second active material can enrich and lock lithium ions that originally may be reduced on the surface of the negative electrode plate to generate lithium dendrite, ameliorate the lithium plating caused by insufficient local lithiation capacity of the negative electrode of the secondary battery, and improve the safety performance of the secondary battery.

In some embodiments, the second active material has a gram capacity higher than that of the first active material, thereby further increasing the lithiation capacity of the negative electrode, enhancing the effect of ameliorating the lithium plating, and improving the safety performance of the secondary battery.

In some embodiments, a mass ratio of the second active material to the first active material is 0.1-2, and is optionally 0.1-1. Therefore, when the second active material layer is coated with a small amount of the second active material, mass change of the secondary battery after increase of the second active material layer is negligible, thereby improving the safety performance of the secondary battery without reducing the energy density of the secondary battery.

A second aspect of the present application is intended to provide an electrode assembly, comprising the negative electrode plate in any of the above embodiments, a positive electrode plate, and a separator; the positive electrode plate comprises a positive electrode active material layer; wherein a capacity a of the second active material layer, a capacity b of the first active material layer, and a capacity c of the positive electrode active material layer satisfy formula (1)

$$a+b=nc, \ n=1.07\text{-}5 \qquad\qquad \text{formula (1)}$$

and in the formula (1), a, b, and c are in a unit of $mAh/cm^2$.

The capacity a of the second active material layer, the capacity b of the first active material layer, and the capacity c of the positive electrode active material layer can further increase the lithiation capacity of the negative electrode, ameliorate the lithium plating of the negative electrode of the secondary battery, and improve the safety performance and cycling performance of the secondary battery.

In some embodiments, the negative electrode plate, the separator, and the positive electrode plate are winded into a winding structure along a winding direction; the winding structure comprises a planar portion and a corner portion connected to the planar portion; and the second active material layer is at least partially located at the corner portion, thereby ameliorating the lithium plating at the corner portion of the secondary battery, and improving the safety of the secondary battery.

In some embodiments, the corner portion comprises a first corner portion and a second corner portion close to a winding start end of the electrode assembly; and the second active material layer is located at the first corner portion and the second corner portion, thereby further ameliorating the lithium plating at an inner-ring corner of the secondary battery, and improving the safety of the secondary battery.

In some embodiments, the current collector of the negative electrode plate further comprises a tab portion; and the second active material layer is further located on one side of the planar portion connected to the tab portion, thereby ameliorating the lithium plating close to the tab portion of the negative electrode plate, and improving the safety of the secondary battery.

In some embodiments, the negative electrode plate, the separator, and the positive electrode plate are successively stacked to form a stacked structure; the stacked structure comprises a center portion and an edge portion arranged around the center portion; and the second active material layer is at least partially located at the edge portion, thereby ameliorating the lithium plating at the edge portion of the negative electrode plate, and improving the safety of the secondary battery.

In some embodiments, the current collector of the negative electrode plate further comprises a tab portion; and the second active material layer is further located on one side of the edge portion connected to the tab portion, thereby ameliorating the lithium plating close to the tab portion of the negative electrode plate, and improving the safety of the secondary battery.

A third aspect of the present application is intended to provide a method for manufacturing a negative electrode plate. The method is used for manufacturing the negative electrode plate in any of the above embodiments. The method for manufacturing a negative electrode plate according to the present application adopts bilayer coating, which is flexible and simple with high process controllability. For negative electrode materials of different systems, a composite negative electrode formed by bilayer coating can avoid process difficulties caused by material system differences.

A fourth aspect of the present application is intended to provide a secondary battery, comprising the electrode assembly in the second aspect of the present application.

A fifth aspect of the present application is intended to provide a battery module, comprising the secondary battery in the fourth aspect of the present application.

A sixth aspect of the present application is intended to provide a battery pack, comprising the battery module in the fifth aspect of the present application.

A seventh aspect of the present application is intended to provide an electrical apparatus, comprising at least one of the secondary battery in the fourth aspect of the present application, the battery module in the fifth aspect of the present application, or the battery pack in the sixth aspect of the present application.

Description of Drawings

Fig. 1 is a schematic cross section of a negative electrode plate according to an embodiment of the present application.
Fig. 2 is a schematic top view of a negative electrode plate according to an embodiment of the present application.
Fig. 3 is a schematic top view of an electrode assembly according to an embodiment of the present application.
Fig. 4 is a detailed schematic diagram of a corner portion of the electrode assembly according to an embodiment of the present application shown in Fig. 3.
Fig. 5 is a schematic top view of a negative electrode plate of an electrode assembly according to an embodiment of the present application.
Fig. 6 is a schematic top view of an electrode assembly according to an embodiment of the present application.
Fig. 7 is a schematic top view of a negative electrode plate of the electrode assembly according to an embodiment of the present application shown in Fig. 6.
Fig. 8 is a schematic diagram of a secondary battery according to an embodiment of the present application.
Fig. 9 is an exploded view of the secondary battery according to an embodiment of the present application shown in Fig. 8.
Fig. 10 is a schematic diagram of a battery module according to an embodiment of the present application.
Fig. 11 is a schematic diagram of a battery pack according to an embodiment of the present application.
Fig. 12 is an exploded view of the battery pack according to an embodiment of the present application shown in Fig. 11.
Fig. 13 is a schematic diagram of an electrical apparatus in which a secondary battery is used as a power source according to an embodiment of the present application.
Fig. 14 is a delithiation curve and a lithiation curve of a first active material, and a delithiation curve and a lithiation curve of a second material according to an embodiment of the present application.

Description of reference numerals:

1 battery pack; 2 upper box; 3 lower box; 4 battery module; 5 secondary battery; 51 case; 52 electrode assembly; 53 top cover assembly; 54 connection member; 55 electrode terminal; 6 positive electrode plate; 7 negative electrode plate; 9 separator; 100 current collector; 101 first active material layer; 102 second active material layer; 111 planar portion; 112 corner portion; 112a first corner portion; 112b second corner portion; 100a tab portion.

**Detailed Description**

Embodiments of a positive electrode active material, a manufacturing method therefor, a positive electrode plate, a secondary battery, a battery module, a battery pack, and an electrical apparatus in the present application are specifically disclosed below by referring to the detailed description of drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limits and upper limits define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4, and 5 are listed, the following ranges are all contemplated: 1-3, 1-4, 1-5, 2-3, 2-4, and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, the terms "comprise", "comprising", "include" and "including" mentioned in the present application may be open-ended or closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

At present, from the perspective of the development of the market situation, power batteries are increasingly widely applied. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

The inventor notes that a power battery exists in an actual use process: a lithium plating phenomenon tends to occur at some positions of a negative electrode plate due to insufficient lithiation capacity. With the continuous generation of lithium dendrite, a separator is punctured, thereby resulting in a battery short circuit, and reducing safety performance of the battery.

In order to alleviate the lithium plating of the negative electrode plate and improve the energy density of the battery, the inventor designed a negative electrode plate through in-depth study, comprising: a current collector, a first active material layer arranged on at least one surface of the current collector, and a second active material layer arranged on a surface of the first active material layer away from the current collector. The first active material layer comprises a first active material, the second active material layer comprises a second active material, and the second active material has a lithiation potential and a delithiation potential higher than those of the first active material.

The negative electrode plate is coated with the second active material layer having the high lithiation potential and the high delithiation potential at a position where lithium plating tends to occur, thereby ameliorating the negative electrode lithium plating of the secondary battery, improving the safety performance of the secondary battery, and extending the service life of the battery, without reducing the energy density of the battery.

The secondary battery disclosed in examples of the present application may be used in, but not limited to, electrical apparatuses, such as a vehicle, a ship, or an aircraft. Examples of the present application provide an electrical apparatus using a secondary battery as a power source. The electrical apparatus may be, but is not limited to, a mobile phone, a tablet, a laptop, an electric toy, an electric tool, a battery car, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

[Electrode plate structure]

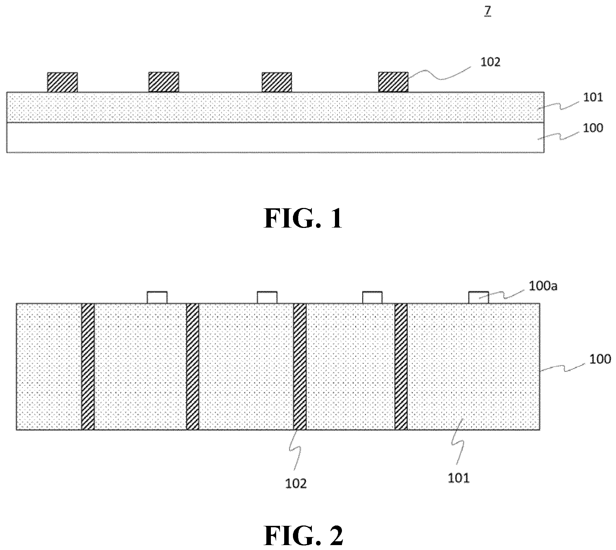

As shown in Fig. 1 and Fig. 2, an embodiment of the present application presents a negative electrode plate 7, comprising: a current collector 100; a first active material layer 101 arranged on at least one surface of the current collector 100; and a second active material layer 102 arranged on a surface of the first active material layer 101 away from the current collector 100; wherein the first active material layer 101 comprises a first active material, the second active material layer 102 comprises a second active material, and the second active material has a lithiation potential and a delithiation potential higher than those of the first active material.

The first active material may include at least one of the following materials: artificial graphite, natural graphite, soft carbon, hard carbon, a silicon-based material, and the like.

The inventor of the present application finds that: the first active material layer 101 is locally coated with the second active material layer 102 having the high lithiation potential and the high delithiation potential, so that lithium is first intercalated into the second active material coated on the upper layer to prevent lithium intercalated into the second active material from deintercalation and re-intercalation into the first active material and from resulting in lithium plating, thereby ameliorating the negative electrode lithium plating, and improving the safety and cycling stability of the secondary battery. In addition, the overall lithiation capacity improvement of the negative electrode also improves functioning of the gram capacity of the positive electrode of the battery, and improves the energy density of the battery.

In some embodiments, optionally, there is a plurality of second active material layers 102, and the plurality of second active material layers 102 is spaced. Therefore, the first active material layer can be selectively coated with the second active material layer at a selected position where lithium plating tends to occur, thereby ameliorating the negative electrode lithium plating of the secondary battery, and improving the cycling performance and energy density of the secondary battery.

The "spaced" means that there is a spacing between at least two second active material layers among the plurality of second active material layers. According to the actual production requirements, a spacing between any two adjacent second active material layers may be equal or may be different, which is not limited in the present application.

In some embodiments, the lithiation potential of the second active material is higher than a lithiation potential of the first active material when a lithiation capacity of the negative electrode plate 7 is within a range of 0-300 mAh/g. The lithiation potential of the second active material and the lithiation potential of the first active material satisfy the above relationship within the specific lithiation capacity range, to ensure that lithium from the positive electrode material can be first intercalated into the second active material, thereby improving the lithiation capacity of the negative electrode, reducing the lithium plating risk of the negative electrode of the secondary battery, and improving the safety performance of the secondary battery.

In some embodiments, the delithiation potential of the second active material is higher than the delithiation potential of the first active material when the delithiation capacity of the negative electrode plate 7 is within a range of 10-300 mAh/g. The delithiation potential of the second active material and the delithiation potential of the first active material satisfy the above relationship within the specific lithiation capacity range, so that lithium ions intercalated into the second active material are merely partially deintercalated or are not deintercalated in subsequent charging and discharging process of the battery, and the non-deintercalated lithium ions will fail to be reduced and generate lithium dendrite. That is, the second active material can enrich and lock lithium ions that originally may be reduced on the surface of the negative electrode plate to generate lithium dendrite, ameliorate the lithium plating caused by insufficient local lithiation capacity of the negative electrode of the secondary battery, and improve the safety performance of the secondary battery.

In some embodiments, the second active material has a gram capacity higher than that of the first active material, Specifically, the second active material has a gram capacity higher than that of the first active material in a potential range of greater than 0.5 V (vs Li/Li$^+$), thereby further increasing the lithiation capacity of the negative electrode, ameliorating the lithium plating caused by insufficient local lithiation capacity of the negative electrode of the secondary battery, and improving the safety performance of the secondary battery. The second active material includes, but is not limited to, one or more of transition metal oxides, lithium titanate, etc.

In some embodiments, a mass ratio of the second active material to the first active material is 0.1-2, and is optionally 0.1-1. Therefore, when the second active material layer is coated with a small amount of the second active material, mass change of the secondary battery after increase of the second active material layer is negligible, thereby improving the safety performance of the secondary battery without reducing the energy density of the secondary battery.

In addition, the negative electrode active material of the present application adopts bilayer coating, which is flexible and simple with high process controllability. For negative electrode materials of different systems, a composite negative electrode formed by bilayer coating can avoid process difficulties caused by material system differences.

[Electrode assembly]

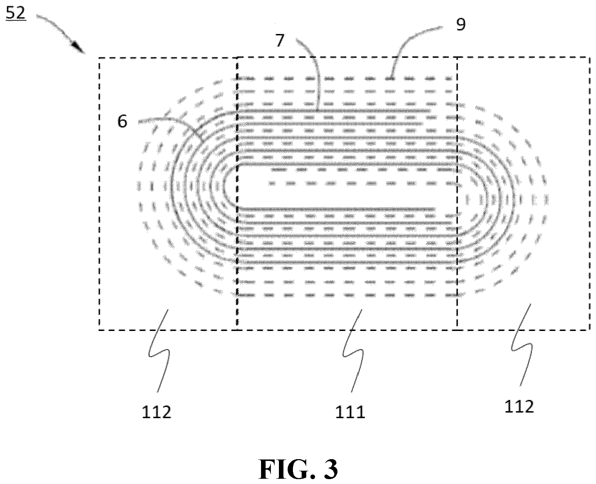

As shown in Fig. 3 to Fig. 6, an embodiment of the present application provides an electrode assembly 52, comprising the negative electrode plate 7, a positive electrode plate 6, and a separator 9; the positive electrode plate 7 comprises a positive electrode active material layer; where a capacity a of the second active material layer, a capacity b of the first active material layer, and a capacity c of the positive electrode active material layer satisfy formula (1)

$$a+b=nc, \quad n=1.07\text{-}5 \qquad\qquad \text{formula (1)}$$

and in the formula (1), a, b, and c are in a unit of mAh/cm2.

Here, the computing method of the capacity is: capacity=gram capacity of active material (mAh/g)*mass of active material in active material layer (g/cm2)

When n is less than 1.07, the second active material provides insufficient lithiation capacity, thereby failing to effectively reduce the lithium plating risk; while when n is greater than 5, the lithium plating risk of the secondary battery can be reduced, but the second active material enriches excessive lithium, which tends to cause lithium loss, and increases the battery mass, thereby reducing the energy density of the battery.

The capacity ratio of the positive electrode to the negative electrode within the above range can further increase the lithiation capacity of the negative electrode, ameliorate the negative electrode lithium plating of the secondary battery, and improve the safety performance, cycling performance, and energy density of the secondary battery.

As shown in Fig. 3, the electrode assembly 52 may have a winding structure. Specifically, there is one positive electrode plate 6 and one negative electrode plate 7, and the positive electrode plate 6 and the negative electrode plate 7 each has a banded structure. The positive electrode plate 6, the separator 9, and the negative electrode plate 7 are successively stacked and winded for two circles or more to form the electrode assembly 52. The electrode assembly 52 may be tabular.

In some embodiments, as shown in Fig. 3, the negative electrode plate 7, the separator 9, and the positive electrode plate 6 are winded into a winding structure along a winding direction; the winding structure comprises a planar portion 111 and a corner portion 112 connected to the planar portion 111; and the second active material layer 102 is at least partially located at the corner portion 112, thereby ameliorating the lithium plating at the corner portion of the secondary battery, and improving the safety of the secondary battery.

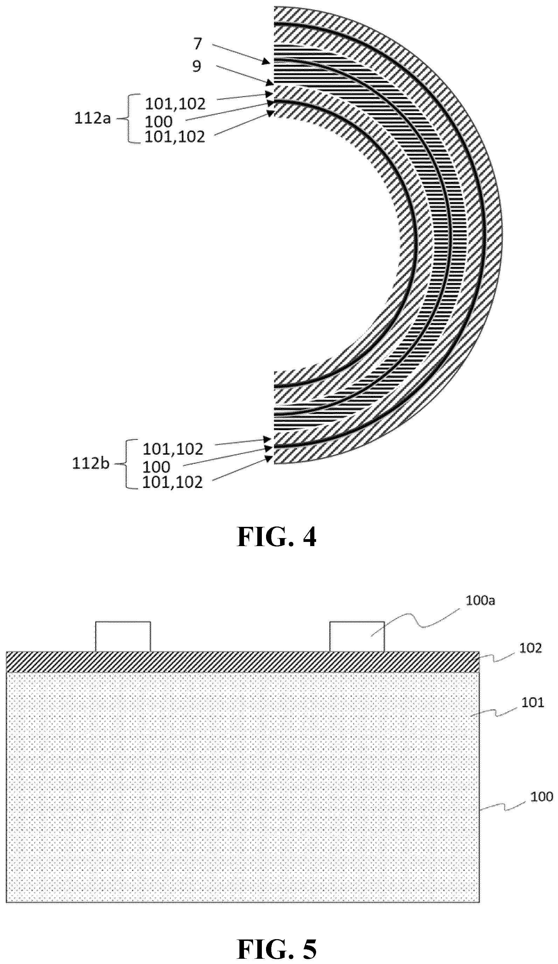

In some embodiments, as shown in Fig. 4, the corner portion 112 comprises a first corner portion 112a and a second corner portion 112b close to a winding start end of the electrode assembly; and the second active material layer 102 is located at the first corner portion 112a and the second corner portion 112b, thereby further ameliorating the lithium plating at an inner-ring corner of the secondary battery.

In some embodiments, as shown in Fig. 5, the current collector 100 of the negative electrode plate 7 further comprises a tab portion 100a; and the second active material layer 102 is further located on one side of the planar portion 111 connected to the tab portion 100a, thereby ameliorating the lithium plating close to the tab portion of the negative electrode of the secondary battery, and improving the safety of the secondary battery.

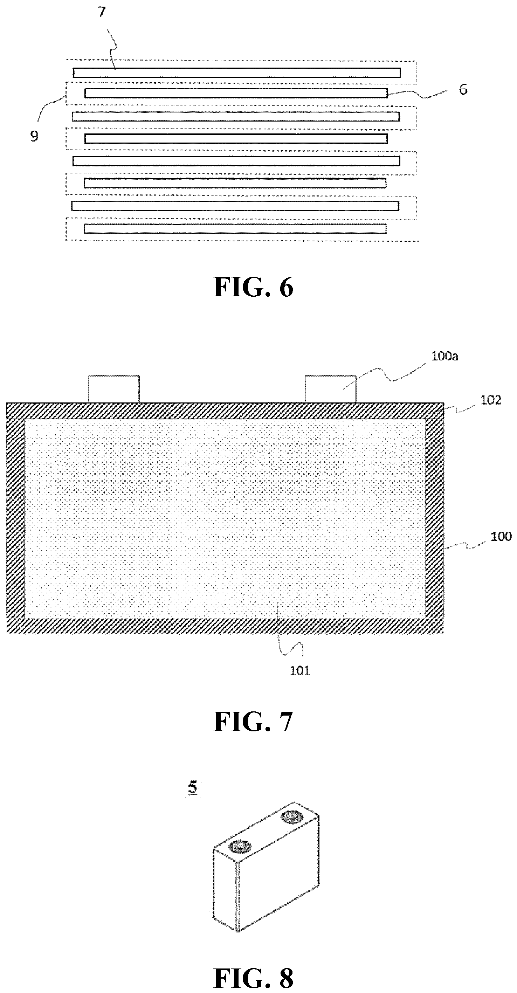

Alternatively, as shown in Fig. 6, the electrode assembly 52 may further have a stacked structure. Specifically, a plurality of positive electrode plates 6 is arranged, a plurality of negative electrode plates 7 is arranged, the plurality of positive electrode plates 6 and the plurality of negative electrode plates 7 are stacked alternately, and each of the positive electrode plates 6 is separated from each of the negative electrode plates 7 by the separator 9.

In some embodiments, as shown in Fig. 7, the negative electrode plate 7, the separator 9, and the positive electrode plate 9 are successively stacked to form a stacked structure; the stacked structure comprises a center portion and an edge portion arranged around the center portion; and the second active material layer is at least partially located at the edge portion, thereby ameliorating the lithium plating at an edge of the negative electrode plate opposite to a position of the positive electrode plate without the active material layer in the secondary battery.

In some embodiments, as shown in Fig. 7, the current collector of the negative electrode plate 7 further comprises a tab portion 100a; and the second active material layer 102 is further located on one side of the edge portion connected to the tab portion, thereby ameliorating the lithium plating close to the tab portion of the negative electrode of the secondary battery, and improving the safety of the secondary battery.

[Secondary battery]

Fig. 8 shows a secondary battery 5 of a square structure. In the present application, the secondary battery includes a lithium-ion battery, a lithium-sulfur battery, a sodium/lithium-ion battery, a sodium-ion battery, or a magnesium-ion battery, etc. The concept of the present application will be described below mainly taking the lithium-ion battery as an example. It should be understood that a rechargeable battery of any other appropriate type is applicable.

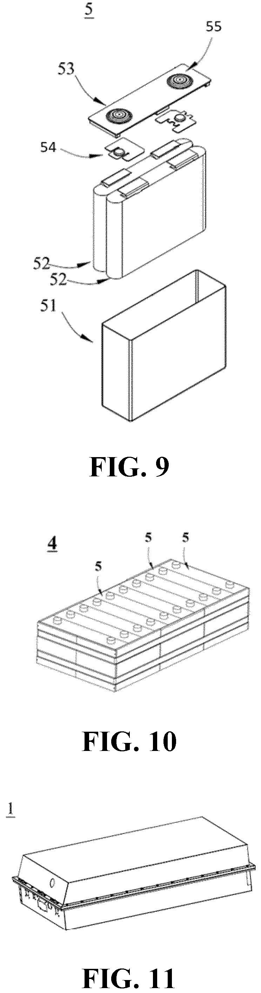

Referring to Fig. 9, the secondary battery 5 according to an embodiment of the present application comprises a shell (including a case 51 and a cover plate 53) and an electrode assembly 52. The case 51 may comprise a bottom plate and a side plate connected to the bottom plate, which enclose to form an accommodating cavity. In the present application, the shape of the case 51 is not particularly limited, and may be a cylindrical shape, a square shape, or any other shape. The case 51 has an opening that communicates with the accommodating cavity, and the cover plate 53 can cover the opening to close the accommodating cavity. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

There are two electrode terminals 55 which are arranged on the cover plate 53. There are two connection members 54, one of the connection members 54 is connected to one of the electrode terminals 55 and the positive electrode plate 6 of the electrode assembly 52, and the other connection member 54 is connected to the other electrode terminal 55 and the negative electrode plate 7 of the electrode assembly 52.

In addition, the secondary battery, the battery module, the battery pack, and the electrical apparatus in the present application are described below with reference to the drawings as appropriate.

In an embodiment of the present application, a secondary battery is provided.

In general, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

[Positive electrode plate]

The positive electrode plate comprises a positive electrode current collector and a positive electrode film layer arranged on at least one surface of the positive electrode current collector, and the positive electrode film layer comprises the positive electrode active material in the first aspect of the present application.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector can comprise a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as $LiCoO_2$), a lithium-nickel oxide (such as $LiNiO_2$), a lithium-manganese oxide (such as $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as Li-$Ni_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of lithium-containing phosphates of olivine structure may include, but are not limited to, at least one of lithium iron phosphate (e.g., $LiFePO_4$ (also abbreviated as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

[Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may comprise a high molecular material base layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a high molecular material substrate (e.g., polypropylene (PP), polyethylene terephthalate (PET), polybutylene terephthalate (PBT), polystyrene (PS), polyethylene (PE), etc.).

In some embodiments, a negative electrode active material for a battery well known in the art may be used as a first negative electrode active material. As an example, the negative electrode active material may include at least one of the following materials: artificial graphite, natural graphite, soft carbon, hard carbon, a silicon-based material, and the like.

The silicon-based material may be selected from at least one of elemental silicon, silicon-oxygen complex, silicon-carbon complex, silicon-nitrogen complex, and silicon alloy. However, the present application is not limited to these materials, and other conventional materials useful as negative electrode active materials for batteries can also be used. These negative electrode active materials may be used alone or in a combination of two or more thereof.

In some embodiments, a second negative electrode active material may comprise at least one of the following materials: a transition metal oxide (e.g., Fe2O3, Fe3O4, Mn2O3, Co3O4, NiO, ZnO), a lithium-containing transition metal oxide (e.g., $Li_4Ti_5O12$), and the like. It is understandable that any one of the above materials may be used alone, or any more of the above materials may be mixed for use, as a material for the second negative electrode active material layer, to achieve a lithiation potential higher than the lithiation potential of the first active material when the lithiation capacity of the negative electrode is within the range of 0-300 mAh/g, and a delithiation potential higher than the delithiation potential of the first active material when the delithiation capacity of the negative electrode is within the range of 10-300 mAh/g. Preferably, a material for the second negative electrode active material layer has a gram capacity higher than that of a material for the first negative electrode active material layer. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS), polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

**In** some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

**In** some embodiments, the negative electrode film layer further optionally comprises other adjuvants, for example, a thickener (such as sodium carboxymethyl cellulose (CMC-Na)).

**In** some embodiments, a negative electrode plate comprising the first active material may be prepared by: dispersing the above components, such as the first negative electrode active material, the conductive agent, the binder, and any other component, for preparing a negative electrode slurry comprising the first active material in a solvent (such as deionized water) to form the negative electrode slurry of the first active material; coating the negative electrode slurry on the negative electrode current collector, drying, and cold pressing, to provide a negative electrode plate comprising a first active coating.

In some embodiments, a negative electrode plate comprising the first active material and the second active material may be prepared by: dispersing the above components, such as the second active material, the conductive agent, the binder, and any other component, for preparing a negative electrode slurry of the second active material in a solvent (such as N-methyl pyrrolidone) to form the negative electrode slurry of the second active material; coating the negative electrode slurry of the second active material on the negative electrode plate comprising the first active coating, and drying, to provide the positive electrode plate.

[Electrolyte]

The electrolyte serves to conduct ions between the positive electrode plate and the negative electrode plate. The type of the electrolyte is not particularly limited in the present application, and can be selected according to requirements.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

[Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft bag may be a plastic, and the examples of the plastic may include polypropylene, polybutylene terephthalate, polybutylene succinate, and the like.

The shape of the secondary battery is not particularly limited in the present application, and may be a cylinder, a square, or any other shape.

In some embodiments, the secondary batteries may be assembled into a battery module, the number of secondary batteries comprised in the battery module may be one or more, and the specific number may be selected by those skilled in the art according to the application and capacity of the battery module.

Fig. 10 shows an example of battery module 4. Referring to Fig. 10, in the battery module 4, a plurality of secondary batteries 5 can be sequentially arranged along a length direction of the battery module 4. Of course, any other arrangement is also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

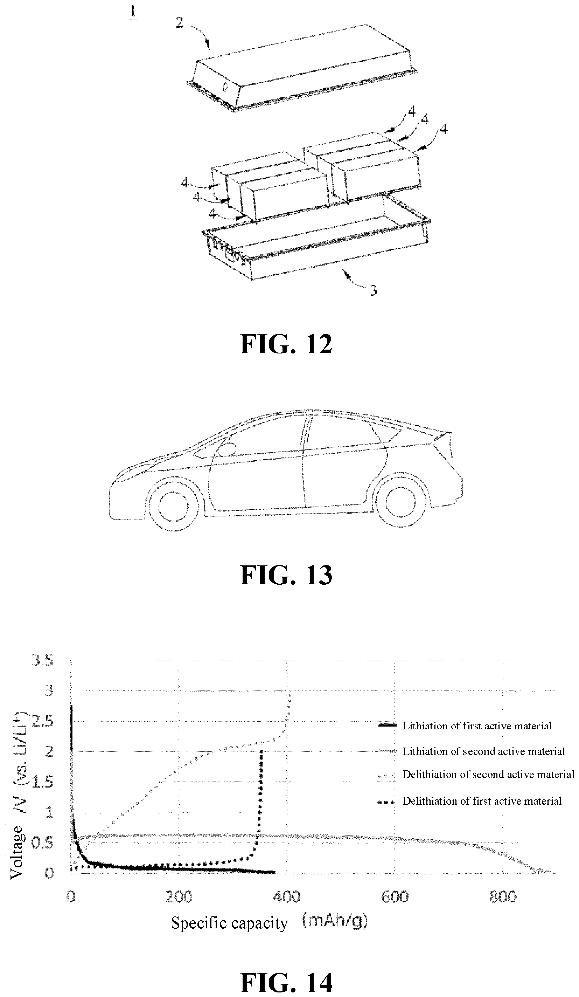

Fig. 11 and Fig. 12 show an example of battery pack 1. Referring to Fig. 11 and Fig. 12, the battery pack 1 may comprise a battery box and a plurality of battery modules 4 arranged in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack may be selected according to its use requirements.

Fig. 13 is an example of electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

## Examples

Examples of the present application will be described below. The examples described below are illustrative, are merely used to explain the present application, and should not be construed as limiting the present application. Where no specific techniques or conditions are specified in the examples, the techniques or conditions described in literatures of the art or the product manuals are prevailing. Where manufacturers are not specified, the employed reagents or instruments are all commercially available conventional products.

**I. Preparation of a secondary battery**

<Example 1>

(1) Preparation of a negative electrode material

Graphite (as a first negative electrode active material), a conductive agent Super P, a thickener CMC, and a binder styrene butadiene rubber (SBR) were sufficiently mixed in deionized water to form a first negative electrode slurry. A solid content of the negative electrode slurry was 53 wt%, and a mass ratio of graphite, Super P, CMC, and the binder styrene butadiene rubber (SBR) in the solid components was 96:2:1:1.

NiO (as a second negative electrode active material), a conductive agent Super P, and a binder polyvinylidene fluoride (PVDF) were sufficiently mixed in N-methyl pyrrolidone (NMP) to form a second negative electrode slurry. A solid content of the negative electrode slurry was 43 wt%, and a mass ratio of NiO, Super P, CMC, and the binder styrene butadiene rubber (SBR) in the solid components was 92:6:2.

(2) Preparation of a negative electrode plate

The first negative electrode slurry was coated on a current collector copper foil, and dried at 85°C to form a first negative electrode active material layer. Then, the second negative electrode slurry was coated on the first negative electrode active material layer at a specified position, and dried at 85°C. Then, the negative electrode plate was obtained by cold pressing, edge cutting, slicing, and striping, and then drying at 120°C under vacuum for 12 h.

(3) Preparation of a positive electrode plate

A positive electrode material lithium iron phosphate, a conductive agent Super P, and a binder polyvinylidene fluoride (PVDF) were made into a positive electrode slurry in N-methyl pyrrolidone (NMP). A solid content of the positive electrode slurry was 64 wt%, and a mass ratio of lithium iron phosphate, Super P, and PVDF in the solid components was 97:1:2. The positive electrode slurry was coated on a current collector aluminum foil, dried at 85°C, then cold pressed, then subjected to edge cutting, slicing, and striping, and then dried at 85°C under vacuum for 4 h, to provide the positive electrode plate.

(4) Preparation of a lithium-ion battery:

A polyethylene film (PE) was used as a separator. The resulting positive electrode plate, the separator, and the negative electrode plate were sequentially stacked, such that the separator was located between the positive electrode plate and the negative electrode plate to function for separating the positive electrode from the negative electrode, and then winded to obtain a bare battery cell. A tab was welded, the bare battery cell was placed in an outer package, and the above resulting electrolyte solution was injected into a dried battery cell. The preparation of the lithium-ion battery was completed after the processes, such as encapsulation, standing, formation, shaping, and capacity test.

<Example 2>-<Example 11>, and <Comparative Examples 1-3>

The method for preparing the secondary batteries in Examples 2-11 and the secondary batteries in Comparative Examples 1-3 was similar to the method for preparing the secondary battery in Example 1, except that the compositions of the second active material and the mass ratio of the second active material to the first active material were regulated. Different product parameters are detailed in Table 1.

Then, the testing processes of the relevant parameters of the electrode assembly are illustrated.

[1] Method for determining a lithiation potential of the first active material and a lithiation potential of the second active material

The negative electrode material powder was made into an electrode plate as per a certain formula, the electrode plate was assembled into a semi-button battery of electrode plate-lithium sheet, the semi-button battery was charged and discharged at a small rate to obtain total charge/discharge capacities of the negative electrode material at different potentials, and then a total charge/discharge capacity of the second circle was divided by the mass of the electrode plate active material to obtain a potential-charge/discharge capacity curve of the material. Here, the value of the lithiation potential is a corresponding potential value of a corresponding capacity of the potential-capacity curve during the second circle of discharge.

[2] Method for determining a delithiation potential of the first active material and a delithiation potential of the second active material

The negative electrode material powder was made into an electrode plate as per a certain formula, the electrode plate was assembled into a semi-button battery of electrode plate-lithium sheet, the semi-button battery was charged and discharged at a small rate to obtain total charge/discharge capacities of the negative electrode material at different potentials, and then a total charge/discharge capacity of the second circle was divided by the mass of the electrode plate active material to obtain a potential-charge/discharge capacity curve of the material. Here, the value of the delithiation potential is a corresponding potential value of a corresponding capacity of the potential-capacity curve during the second circle of charge.

[3] Method for determining a capacity of the first negative electrode active material layer and a capacity of the second negative electrode active material layer

The material powder was made into an electrode plate as per a certain formula, assembled into a semi-button battery of electrode plate-lithium sheet, the semi-button battery was charged and discharged at a small rate to obtain a capacity of the button battery, and then the capacity was divided by the mass of the active material of the electrode plate to obtain a gram capacity parameter. Here, the computing method of the capacity is: capacity (mAh/cm2)=gram capacity of active material (mAh/g)*mass of active material in active material layer (g/cm2).

[4] Method for determining a capacity of the positive electrode active material layer

The material powder was made into an electrode plate as per a certain formula, assembled into a semi-button battery of electrode plate-lithium sheet, the semi-button battery was charged and discharged at a small rate to obtain a capacity of the button battery, and then the capacity was divided by the mass of the active material of the electrode plate to obtain a gram capacity parameter. Here, the computing method of the capacity is: capacity (mAh/cm2)=gram capacity of active material (mAh/g)*mass of active material in active material layer (g/cm2).

**II. Battery performance test**

For the secondary batteries produced in the above I. [1]-[4], the performance test was conducted as follows. The results are shown in Table 2.

[1] Negative electrode lithium plating

The battery after formation was charged to 3.65V at a constant current of 2C at 25°C, then charged at a constant voltage of 3.65V until the current was less than 0.05C, and then discharged to 2.5V at 1C. After 10 cycles, the battery was charged to 3.65V at a constant current of 0.33C, and then charged at a constant voltage of 3.65V until the current less than 0.05C, to obtain a fully charged battery.

The battery after 10 cycles was disassembled to observe convex surface lithium plating of the negative electrode, and the result was recorded in the row of "convex surface lithium plating of negative electrode" in the table below.

Post-observation evaluation standards are as follows.

No lithium plating: a surface of a fully charged negative electrode at a corner region is golden yellow, and after wiping with dust-free paper, no grey metal lithium powder is left on the paper.

Slight lithium plating: a surface of a fully charged negative electrode at a corner region is dark yellow, and after wiping with dust-free paper, grey metal lithium powder is left on the paper.

Grey spot: a surface of a fully charged negative electrode at a corner region is locally grey, and no golden yellow is exposed.

Serious lithium plating: a surface of a fully charged negative electrode at a corner region is completely grey, and no golden yellow is exposed.

In the present application, a preferred sequence of the convex surface lithium plating of the negative electrode is no lithium plating>grey spot>slight lithium plating>serious lithium plating.

[Table 1]

| | First active material | | | Second active material | | | Mass ratio of second active material to first active material | Positive electrode active material | Negative electrode lithium plating |
|---|---|---|---|---|---|---|---|---|---|
| | Material | Lithiation potential | Delithiation potential | Material | Lithiation potential | Delithiation potential | | | |
| Example 1 | Graphite | 0.01 | 0.01 | NiO | 0.5 | 1.0 | 0.1 | Lithium iron phosphate | No lithium plating |
| Example 2 | Graphite | 0.01 | 0.01 | NiO | 0.5 | 1.0 | 0.3 | Lithium iron phosphate | No lithium plating |
| Example 3 | Graphite | 0.01 | 0.01 | NiO | 0.5 | 1.0 | 0.5 | Lithium iron phosphate | No lithium plating |
| Example 4 | Graphite | 0.01 | 0.01 | NiO | 0.5 | 1.0 | 1 | Lithium iron phosphate | No lithium plating |
| Example 5 | Graphite | 0.01 | 0.01 | NiO | 0.5 | 1.0 | 1.5 | Lithium iron phosphate | No lithium plating |
| Example 6 | Graphite | 0.01 | 0.01 | CuO | 1.3 | 0.6 | 2 | Lithium iron phosphate | No lithium plating |
| Example 7 | Graphite | 0.01 | 0.01 | $Mn_3O_4$ | 0.6 | 0.6 | 1 | Lithium iron phosphate | No lithium plating |
| Example 8 | Graphite | 0.01 | 0.01 | $MnO_2$ | 0.5 | 0.5 | 1 | Lithium iron phosphate | No lithium plating |
| Example 9 | Graphite | 0.01 | 0.01 | $Fe_3O_4$ | 1.5 | 0.8 | 1 | Lithium iron phosphate | No lithium plating |
| Example 10 | Graphite | 0.01 | 0.01 | CuO | 1.3 | 0.6 | 1 | Lithium iron phosphate | No lithium plating |
| Example 11 | Graphite | 0.01 | 0.01 | $Co_3O_4$ | 1.5 | 0.7 | 1 | Lithium iron phosphate | No lithium plating |
| Comparative Example 1 | Graphite | 0.01 | 0.01 | \ | \ | \ | \ | Lithium iron phosphate | Slight lithium plating |
| Comparative Example 2 | Graphite | 0.01 | 0.01 | NiO | 0.5 | 1.0 | 3 | Lithium iron phosphate | No lithium plating |
| Comparative Example 3 | Graphite | 0.01 | 0.01 | NiO | 0.5 | 1.0 | 0.05 | Lithium iron phosphate | Grey spot |

In Table 1, the lithiation potential or the delithiation potential refers to a potential corresponding to a lithiation capacity or a delithiation capacity of 100 mAh/g. Specifically, as shown in Fig. 14, the lithiation potential of the first active material refers to a potential corresponding to a specific capacity of 100 mAh/g on the lithiation curve of the first active material. The delithiation potential of the first active material refers to a potential corresponding to a specific capacity of 100 mAh/g on the delithiation curve of the first active material. Similarly, the lithiation potential or the delithiation potential of the second active material can be obtained. The above potentials are all relative to Li/Li$^+$ in a unit of V. In addition, as can be seen from Fig. 14, when the lithiation capacity is within the range of 0-300 mAh/g, the lithiation potential of the second active material is higher than the lithiation potential of the first active material, and when the delithiation capacity is within the range of 10-300 mAh/g, the delithiation potential of the second active material is higher than the delithiation potential of the first active material.

[Table 2]

| | First negative electrode active material | | | Second negative electrode active material | | | Positive electrode active material | | (a+b)/c | Negative electrode lithium plating |
|---|---|---|---|---|---|---|---|---|---|---|
| | Material | Gram capacity | Capacity b | Material | Gram capacity | Capacity a | Material | Capacity c | | |
| Example 1 | Graphite | 355 | 1.85 | NiO | 877 | 0.46 | Lithium iron phosphate | 2.07 | 1.12 | No lithium plating |
| Example 2 | Graphite | 355 | 1.85 | NiO | 877 | 1.37 | Lithium iron phosphate | 2.07 | 1.56 | No lithium plating |
| Example 3 | Graphite | 355 | 1.85 | NiO | 877 | 2.29 | Lithium iron phosphate | 2.07 | 2.00 | No lithium plating |
| Example 4 | Graphite | 355 | 1.85 | NiO | 877 | 4.57 | Lithium iron phosphate | 2.07 | 3.10 | No lithium plating |
| Example 5 | Graphite | 355 | 1.85 | NiO | 877 | 6.86 | Lithium iron phosphate | 2.07 | 4.21 | No lithium plating |
| Example 6 | Graphite | 355 | 1.85 | CuO | 674 | 7.02 | Lithium iron phosphate | 2.07 | 4.29 | No lithium plating |
| Example 7 | Graphite | 355 | 1.85 | $Mn_3O_4$ | 937 | 4.88 | Lithium iron phosphate | 2.07 | 3.25 | No lithium plating |
| Example 8 | Graphite | 355 | 1.85 | $MnO_2$ | 1223 | 6.37 | Lithium iron phosphate | 2.07 | 3.97 | No lithium plating |
| Example 9 | Graphite | 355 | 1.85 | $Fe_3O_4$ | 925 | 4.82 | Lithium iron phosphate | 2.07 | 3.22 | No lithium plating |
| Example 10 | Graphite | 355 | 1.85 | CuO | 674 | 3.51 | Lithium iron phosphate | 2.07 | 2.59 | No lithium plating |
| Example 11 | Graphite | 355 | 1.85 | $Co_3O_4$ | 890 | 4.64 | Lithium iron phosphate | 2.07 | 3.14 | No lithium plating |
| Comparative Example 1 | Graphite | 355 | 1.85 | \ | \ | \ | Lithium iron phosphate | 2.07 | 0.89 | Slight lithium plating |
| Comparative Example 2 | Graphite | 355 | 1.85 | NiO | 877 | 9.14 | Lithium iron phosphate | 2.07 | 5.31 | No lithium plating |
| Comparative Example 3 | Graphite | 355 | 1.85 | NiO | 877 | 0.23 | Lithium Iron Phosphate | 2.07 | 1.00 | Grey spot |

In Table 2, the gram capacity is in a unit of mAh/g, and the capacity is in a unit of mAh/cm.

**III. Analysis on test results of each example and comparative example**

As can be seen from the above Table 1:
As can be seen from the comparison between Examples 1-11 and Comparative Example 1, the negative electrode material comprises the first active material layer and the second active material layer, and the second active material has the lithiation potential and the delithiation potential higher than those of the first active material layer, thereby significantly ameliorating the negative electrode lithium plating. In Comparative Example 1, the second active material layer was not provided, and slight lithium plating occurred on the negative electrode.

As can be seen from the comparison between Examples 1-6 and Comparative Example 2, the mass proportion of the second active material among the negative electrode material reaches a certain content, thereby significantly ameliorating the negative electrode lithium plating. However, too much second active material in Comparative Example 2 will increase the battery mass. From the perspective of ensuring the battery energy density, the mass ratio of the second active material to the first active material is preferably 2 or less, and is more preferably 1 or less.

As can be seen from the comparison between Examples 1-6 and Comparative Example 3, the mass proportion of the second active material among the negative electrode material reaches a certain content, thereby further ameliorating the negative electrode lithium plating. In Comparative Example 3, the mass proportion of the second active material was relatively low, and grey spots occurred on the negative electrode.

As can be seen from the above Table 2:
as can be seen from the comparison between Examples 1-11 and Comparative Examples 1-3, the capacity a of the second active material layer, the capacity b of the first active material layer, and the capacity c of the positive electrode active material layer satisfy $a+b=nc$ (n=1.07-5), thereby significantly ameliorating the negative electrode lithium plating.

As can be seen from the results of Examples 1-11, the gram capacity of the second negative electrode active material is greater than the gram capacity of the first negative electrode active material, thereby improving the effect of ameliorating the lithium plating.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1. A negative electrode plate, wherein
   the negative electrode plate comprises:

   a current collector;
   a first active material layer arranged on at least one surface of the current collector; and
   a second active material layer arranged on a surface of the first active material layer away from the current collector;
   wherein the first active material layer comprises a first active material, the second active material layer comprises a second active material, and the second active material has a lithiation potential and a delithiation potential higher than those of the first active material.

2. The negative electrode plate according to claim 1, wherein
   there are a plurality of the second active material layers, and the plurality of the second active material layers are spaced.

3. The negative electrode plate according to claim 1 or 2, wherein
   a lithiation potential of the second active material is higher than a lithiation potential of the first active material when a lithiation capacity of the negative electrode plate is within a range of 0-300 mAh/g.

4. The negative electrode plate according to claim 1 or 2, wherein
   a delithiation potential of the second active material is higher than a delithiation potential of the first active material when a delithiation capacity of the negative electrode plate is within a range of 10-300 mAh/g.

5. The negative electrode plate according to any one of claims 1 to 4, wherein
the second active material has a gram capacity higher than that of the first active material.

6. The negative electrode plate according to any one of claims 1 to 5, wherein
a mass ratio of the second active material to the first active material is 0.1-2, and is optionally 0.1-1.

7. An electrode assembly, wherein

the electrode assembly comprises the negative electrode plate according to any one of claims 1 to 6, a positive electrode plate, and a separator; and the positive electrode plate comprises a positive electrode active material layer;
wherein a capacity a of the second active material layer, a capacity b of the first active material layer, and a capacity c of the positive electrode active material layer satisfy formula (1)

$$a+b=nc,\ n=1.07\text{-}5 \qquad \text{formula (1)}$$

and in the formula (1), a, b, and c are in a unit of mAh/cm$^2$.

8. The electrode assembly according to claim 7, wherein
the negative electrode plate, the separator, and the positive electrode plate are winded into a winding structure along a winding direction; the winding structure comprises a planar portion and a corner portion connected to the planar portion; and the second active material layer is at least partially located at the corner portion.

9. The electrode assembly according to claim 8, wherein
the corner portion comprises a first corner portion and a second corner portion close to a winding start end of the electrode assembly; and the second active material layer is located at the first corner portion and the second corner portion.

10. The electrode assembly according to claim 8 or 9, wherein the current collector of the negative electrode plate further comprises a tab portion; and the second active material layer is further located on one side of the planar portion connected to the tab portion.

11. The electrode assembly according to claim 7, wherein
the negative electrode plate, the separator, and the positive electrode plate are successively stacked to form a stacked structure; the stacked structure comprises a center portion and an edge portion arranged around the center portion; and the second active material layer is at least partially located at the edge portion.

12. The electrode assembly according to claim 11, wherein the current collector of the negative electrode plate further comprises a tab portion; and the second active material layer is further located on one side of the edge portion connected to the tab portion.

13. A method for manufacturing a negative electrode plate, for use in manufacturing the negative electrode plate according to any one of claims 1 to 6.

14. A secondary battery, wherein
the secondary battery comprises the electrode assembly according to any one of claims 7 to 12.

15. A battery module, wherein
the battery module comprises the secondary battery according to claim 14.

16. A battery pack, wherein
the battery pack comprises the battery module according to claim 15.

17. An electrical apparatus, wherein
the electrical apparatus comprises at least one of the secondary battery according to claim 14, the battery module according to claim 15, and the battery pack according to claim 16.

**FIG. 1**

**FIG. 2**

**FIG. 3**

7

9

112a { 101,102
100
101,102

112b { 101,102
100
101,102

**FIG. 4**

100a

102

101

100

**FIG. 5**

## FIG. 6

## FIG. 7

## FIG. 8

**FIG. 9**

**FIG. 10**

**FIG. 11**

**FIG. 12**

**FIG. 13**

**FIG. 14**

<table>
<tr><td colspan="2" style="text-align:center">**INTERNATIONAL SEARCH REPORT**</td><td>International application No.<br>**PCT/CN2022/099437**</td></tr>
</table>

**A.    CLASSIFICATION OF SUBJECT MATTER**

H01M4/133(2010.01)i;H01M4/1393(2010.01)i;H01M4/485(2010.01)i;H01M4/583(2010.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 负极, 阳极, 第一, 第二, 层, 电位, 钛酸锂, Li4Ti5O12, 石墨, negative electrode, anode, first, second, layer, potential, lithium titanate, graphite

**C.    DOCUMENTS CONSIDERED TO BE RELEVANT**

| Category* | Citation of document, with indication, where appropriate, of the relevant passages | Relevant to claim No. |
|---|---|---|
| X | CN 102332559 A (SANYO ELECTRIC CO., LTD.) 25 January 2012 (2012-01-25)<br>description, paragraphs 2-47, and figures 1-2 | 1, 3-17 |
| Y | CN 102332559 A (SANYO ELECTRIC CO., LTD.) 25 January 2012 (2012-01-25)<br>description, paragraphs 2-47, and figures 1-2 | 2 |
| Y | CN 114583289 A (ZHUHAI COSMX BATTERY CO., LTD.) 03 June 2022 (2022-06-03)<br>description, paragraphs 4-38, and figures 1-3 | 2, 8-9 |
| X | CN 102362375 A (PANASONIC CORP.) 22 February 2012 (2012-02-22)<br>description, paragraphs 2 and 17-84, and figures 1-2 | 1, 3-7, 10-17 |
| Y | CN 102362375 A (PANASONIC CORP.) 22 February 2012 (2012-02-22)<br>description, paragraphs 2 and 17-84, and figures 1-2 | 2, 8-9 |
| X | CN 112670445 A (YINLONG ENERGY CO., LTD.) 16 April 2021 (2021-04-16)<br>description, paragraphs 3-69 | 1, 3-7, 10-17 |
| Y | CN 112670445 A (YINLONG ENERGY CO., LTD.) 16 April 2021 (2021-04-16)<br>description, paragraphs 3-69 | 2, 8-9 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **03 March 2023** | **07 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/099437** |

### C. DOCUMENTS CONSIDERED TO BE RELEVANT

| Category* | Citation of document, with indication, where appropriate, of the relevant passages | Relevant to claim No. |
| --- | --- | --- |
| X | WO 2013099279 A1 (PANASONIC CORP.) 04 July 2013 (2013-07-04) description, paragraphs 2-63 | 1, 3-7, 10-17 |
| Y | WO 2013099279 A1 (PANASONIC CORP.) 04 July 2013 (2013-07-04) description, paragraphs 2-63 | 2, 8-9 |
| A | JP 2017152189 A (FURUKAWA BATTERY CO., LTD. et al.) 31 August 2017 (2017-08-31) entire document | 1-17 |

Form PCT/ISA/210 (second sheet) (July 2022)

**INTERNATIONAL SEARCH REPORT**
**Information on patent family members**

International application No.

**PCT/CN2022/099437**

| Patent document cited in search report | | | Publication date (day/month/year) | Patent family member(s) | | | Publication date (day/month/year) |
|---|---|---|---|---|---|---|---|
| CN | 102332559 | A | 25 January 2012 | US | 2012009472 | A1 | 12 January 2012 |
| | | | | JP | 2012022794 | A | 02 February 2012 |
| CN | 114583289 | A | 03 June 2022 | | None | | |
| CN | 102362375 | A | 22 February 2012 | US | 2012009475 | A1 | 12 January 2012 |
| | | | | JPWO | 2011114641 | A1 | 27 June 2013 |
| | | | | WO | 2011114641 | A1 | 22 September 2011 |
| | | | | KR | 20110127209 | A | 24 November 2011 |
| | | | | CN | 102362375 | B | 27 February 2013 |
| CN | 112670445 | A | 16 April 2021 | | None | | |
| WO | 2013099279 | A1 | 04 July 2013 | JP | 2015046218 | A | 12 March 2015 |
| JP | 2017152189 | A | 31 August 2017 | JP | 6567442 | B2 | 28 August 2019 |

Form PCT/ISA/210 (patent family annex) (July 2022)